# EUROPEAN PATENT APPLICATION

(11) **EP 4 410 400 A1**
(43) Date of publication of application: **07.08.2024**
(21) Application number: 24156138.0
(22) Date of filing: 06.02.2024
(51) Int. Cl.: B01D 46/00, B01D 46/24

(54) **AN AIR FILTER ASSEMBLY**

(30) Priority: 06.02.2023 US 202363483429 P
(71) Applicant: Carrier Corporation, Palm Beach Gardens, FL 33418 (US)
(72) Inventor: TIANKANON, Kasem, Samut Sakhon (TH); KNIGHT, Alan, Syracuse, NY 13221 (US)
(74) Representative: Dehns

(57) **Abstract**

An air filter assembly (110) is disclosed and has a filter housing (202). The filter housing (202) includes an outlet (214) formed on a bottom wall (220) of the filter housing (202). The outlet (214) has an engagement wall (224) formed in a predefined shape around the outlet (214). The filter housing (202) further includes a holder (226) formed concentrically disposed around the outlet (214). The air filter assembly (110) includes a filter cartridge (206) removably installed inside the holder (226). The filter cartridge (206) comprises a filter media (402) configured to clean air and a base (406) removably installed in the holder (226), the base (406) configured to receive the filter media (402). The base (406) comprises a first sealant (422) disposed around the hole (416) and has a flat surface configured to engage with the edges of the engagement walls (224) to form an axial seal and a second sealant (414) disposed around a periphery of the base (406) and configured to engage with an inner wall of the holder (226) to form a radial seal.

## Description

### FIELD OF THE INVENTION

The invention relates to an air filter assembly for a refrigeration system.

### BACKGROUND

An air filter is a device configured to remove dust and particulate matter from the intake air entering an internal combustion engine. The air filter is used in various applications, such as in-vehicle and transport refrigeration units (TRU's). TRU's are employed in the commercial refrigeration system. A commercial refrigeration system is employed both as a stationary system and as a mobile system. A mobile refrigeration system is an example of a refrigeration system installed on a large-sized vehicle, such as a truck or a trailer (towed by a truck, the combination of which can be known as a tractor trailer) or a shipping container.

Conventionally, refrigeration systems for use in commercial or industrial cooling applications serve to regulate the temperature of preferably perishable items, such as food items during storage or transportation. A refrigeration system typically includes an internal combustion engine that powers a compressor of the refrigeration system. Air filters used in the refrigeration system are configured to clean the air entering the internal combustion engine for the combustion of fuel therein. The conventional air filter has a filter housing which receives a filter cartridge. The filter housing and the filter cartridge may have a complementing locking profile that enables a tight fit therebetween.

There are a few limitations of the filter housing used in the conventional air filter. For instance, the filter housing does not allow the proper installation of a filter cartridge having a non-complementing profile. Therefore, the installation of a filter cartridge having a non-complementing profile results in the formation of a seal with gaps. As a result, the replacement filter cartridge will not be able to effectively clean the air.

Manufacturing of the filter cartridge and the filter housing with complementing profiles also warrants a dedicated die each for the filter cartridge and the filter housing to manufacture them.

### SUMMARY

This summary is provided to introduce a selection of concepts, in a simplified format, that are further described in the detailed description of the invention. This summary is neither intended to identify key or essential inventive concepts of the invention nor is it intended for determining the scope of the invention.

According to a first aspect of the invention, there is provided an air filter assembly to clean air and the air filter assembly includes a filter housing. The filter housing includes an outlet formed on a bottom wall of the filter housing. The outlet is configured to allow egress of the air through the filter housing. Moreover, the outlet includes an engagement wall formed in a predefined shape around the outlet. In addition, the filter housing includes a holder formed on the bottom wall and concentrically disposed around the outlet. The air filter assembly includes a filter cartridge removably installed inside the holder, the filter cartridge includes a filter media configured to clean air passing therethrough and a base removably installed in the holder. The base is configured to receive the filter media and to transfer the air from the filter media to the outlet via a hole on the front end of the base. The base has a first sealant disposed around the hole and has a flat surface configured to engage with the edges of the engagement wall to form an axial seal and a second sealant disposed around the periphery of the base and configured to engage with an inner wall of the holder to form a radial seal.

Optionally, the air filter assembly includes a cover detectably coupled to an open end of the filter housing and configured to accommodate the filter cartridge.

Optionally, the first sealant is a flat gasket, and the second sealant is an O-ring.

Optionally, the first sealant is adapted to undergo elastic deformation to form the axial seal.

Optionally, the inlet port is formed tangentially with respect to a curved wall of the filter housing.

Optionally, a portion of the flat surface compresses against the edges of the engagement wall to form the axial seal.

Optionally, the filter cartridge is an end cap at a distal end of the filter media, wherein the end cap abuts the ceiling of the cover.

Optionally, the height of the holder and the length of the base are equal.

Optionally, the filter housing has an outlet port fluidically coupled to the outlet and configured to egress the clean air from the filter housing.

According to a second aspect of the invention, there is provided an air filter assembly to clean air is disclosed that includes a filter housing. The filter housing includes an outlet formed on a bottom wall of the filter housing. The outlet is configured to allow the egress of air through the filter housing. Moreover, the outlet has an engagement wall having a first predefined shape around the outlet and a holder formed on the bottom wall and concentrically around the outlet. The air filter assembly also includes a filter cartridge removably installed inside the holder, the filter cartridge includes a filter media configured to clean air passing therethrough and a base removably installed in the holder. The base is configured to receive the filter media and to transfer the air from the filter media to the outlet via a hole on the front end of the base. Further, the base includes a first sealant disposed around the hole and having a second predefined shape and configured to engage with the engagement wall to form an axial seal and a second sealant disposed around the periphery of the base and configured to engage with an inner wall of the holder to form a radial seal. The first predefined shape is different from the second predefined shape.

Optionally, the air filter assembly includes a cover detectably coupled to an open end of the filter housing and configured to accommodate the filter cartridge.

Optionally, the first sealant is a flat gasket, and the second sealant is an O-ring.

Optionally, the first sealant is adapted to undergo elastic deformation to form the axial seal.

Optionally, the inlet port is formed tangentially with respect to a wall of the filter housing.

Optionally, a portion of the flat surface compresses against the edges of the engagement wall to form the axial seal.

Optionally, the filter cartridge includes an end cap at a distal end of the filter media such that the end cap abuts the ceiling of the cover.

Optionally, the height of the holder and the length of the base are equal.

Optionally, the filter housing includes an outlet port fluidically coupled to the outlet and configured to egress the clean air from the filter housing.

According to a third aspect of the invention there is provided a refrigeration system having a compressor is disclosed that includes an internal combustion engine which powers the compressor and an air filter assembly. The air filter assembly is coupled to an intake manifold of the internal combustion engine which is configured to receive air from the air filter assembly. The air filter assembly includes a filter housing and a filter cartridge. The air filter assembly includes an outlet formed on the bottom wall of the filter housing. The outlet is configured to allow the egress of air through the filter housing. Moreover, the outlet has an engagement wall formed in a predefined shape around the outlet and a holder formed on the bottom wall and concentrically around the outlet. The filter cartridge is removably installed inside the holder and includes a filter media configured to clean air passing therethrough and a base removably installed in the holder, the base configured to receive the filter media and to transfer the air from the filter media to the outlet via a hole on a front end of the base. The base includes a first sealant disposed around the hole and having a flat surface configured to engage with the edges of the engagement wall to form an axial seal and a second sealant disposed around the periphery of the base and configured to engage with an inner wall of the holder to form a radial seal.

Optionally, the first sealant is a flat gasket, and the second sealant is an O-ring.

To further clarify the advantages and features of the invention, a more particular description of the invention will be rendered by reference to specific embodiments thereof, which are illustrated in the appended drawings. It is appreciated that these drawings depict only exemplary embodiments of the invention and are therefore not to be considered limiting of the scope of the invention as set out in the appended claims. The invention will be described and explained with additional specificity and detail in the accompanying drawings.

### BRIEF DESCRIPTION OF THE DRAWINGS

Certain exemplary embodiments and other features, aspects, and advantages of the invention will become better understood when the following detailed description is read by way of example only with reference to the accompanying drawings in which like characters represent like parts throughout the drawings, wherein:
Figure 1 illustrates a side view of a tractor trailer having a refrigeration system and an enhanced view of the refrigeration system having an air filter assembly;
Figure 2 illustrates an exploded view of an air filter assembly having a filter housing and a cover;
Figure 3 illustrates an isometric view of the filter housing installed with a filter cartridge;
Figure 4 illustrates a detailed perspective view of the filter cartridge;
Figure 5 illustrates a cut sectional view of the filter cartridge; and
Figure 6 illustrates a front view and rear view of the filter cartridge.

Further, skilled artisans will appreciate that elements in the drawings are illustrated for simplicity and may not have necessarily been drawn to scale. Furthermore, in terms of the construction of the device, one or more components of the device may have been represented in the drawings by conventional symbols, and the drawings may show only those specific details that are pertinent to understanding the embodiments of the invention so as not to obscure the drawings with details that will be readily apparent to those of ordinary skill in the art having the benefit of the description herein.

### DETAILED DESCRIPTION OF FIGURES

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates. Unless otherwise defined, all technical and scientific terms used herein have the same meaning as commonly understood by one of ordinary skilled in the art to which invention belongs. The system and examples provided herein are illustrative only and not intended to be limiting.

For example, the term "some" as used herein may be understood as "none" or "one" or "more than one" or "all." Therefore, the terms "none," "one," "more than one," "more than one, but not all" or "all" would fall under the definition of "some." It should be appreciated by a person skilled in the art that the terminology and structure employed herein is for describing, teaching, and illuminating some embodiments and their specific features and elements and therefore, should not be construed to limit, restrict, or reduce the scope of the invention as set out in the appended claims.

For example, any terms used herein such as, "includes," "comprises," "has," "consists," and similar grammatical variants do not specify an exact limitation or restriction, and certainly do not exclude the possible addition of one or more features or elements, unless otherwise stated. Further, such terms must not be taken to exclude the possible removal of one or more of the listed features and elements, unless otherwise stated, for example, by using the limiting language including, but not limited to, "must comprise" or "needs to include."

Whether or not a certain feature or element was limited to being used only once, it may still be referred to as "one or more features" or "one or more elements" or "at least one feature" or "at least one element." Furthermore, the use of the terms "one or more" or "at least one" feature or element do not preclude there being none of that feature or element, unless otherwise specified by limiting language including, but not limited to, "there needs to be one or more..." or "one or more elements is required."

Unless otherwise defined, all terms and especially any technical and/or scientific terms, used herein may be taken to have the same meaning as commonly understood by a person ordinarily skilled in the art.

Reference is made herein to some "embodiments." It should be understood that an embodiment is an example of a possible implementation of any features and/or elements of the invention. Some embodiments have been described for the purpose of explaining one or more of the potential ways in which the specific features and/or elements of the proposed invention fulfil the requirements of uniqueness, utility, and non-obviousness.

Use of the phrases and/or terms including, but not limited to, "a first embodiment," "a further embodiment," "an alternate embodiment," "one embodiment," "an embodiment," "multiple embodiments," "some embodiments," "other embodiments," "further embodiment", "furthermore embodiment", "additional embodiment" or other variants thereof do not necessarily refer to the same embodiments. Unless otherwise specified, one or more particular features and/or elements described in connection with one or more embodiments may be found in one embodiment, or may be found in more than one embodiment, or may be found in all embodiments, or may be found in no embodiments. Although one or more features and/or elements may be described herein in the context of only a single embodiment, or in the context of more than one embodiment, or in the context of all embodiments, the features and/or elements may instead be provided separately or in any appropriate combination or not at all. Conversely, any features and/or elements described in the context of separate embodiments may alternatively be realized as existing together in the context of a single embodiment.

Any particular and all details set forth herein are used in the context of some embodiments and therefore should not necessarily be taken as limiting factors to the proposed invention.

Embodiments of the invention will be described below in detail with reference to the accompanying drawings.

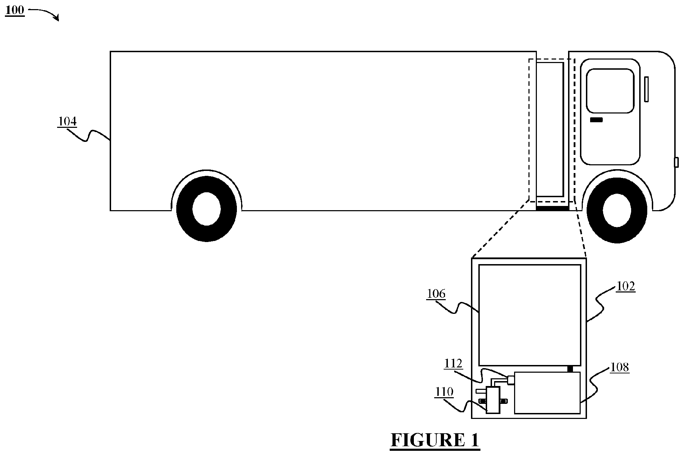

Figure 1 illustrates a tractor trailer 100 having a refrigeration system 102 and an enhanced view of the refrigeration system 102 having an air filter assembly 110. The tractor trailer 100 may be used to transport perishable items, such as food items and pharmaceutical drugs. The tractor trailer 100 may include a cargo container 104 that stores the items. Further, the refrigeration system 102 is installed on the cargo container 104 and is configured to regulate the temperature of the items in the cargo container 104. The refrigeration system 102 may also be termed a transport refrigeration unit (TRU) which is a standalone unit that provides cooling to the cargo container 104. Further, the refrigeration system 102 does not draw power from a prime mover of the tractor trailer 100.

The refrigeration system 102 includes a refrigeration unit 106, an internal combustion engine 108, and the air filter assembly 110. The internal combustion engine 108 is configured to power the refrigeration unit 106. In some embodiments, the internal combustion engine 108 powers a compressor of the refrigeration unit 106. Further, the internal combustion engine 108 is coupled to an electric generator that generates electricity for other components of the refrigeration unit 106. The internal combustion engine 108 is supplied with the air filter assembly 110 which is coupled to an inlet manifold of 112 the internal combustion engine 108. In operation, the air filter assembly 110 may intake and clean ambient air before supplying the clean air to the internal combustion engine 108.

In some embodiments, the refrigeration system 102 may include multiple air filter assemblies 110 working in conjunction to clean great volumes of air. Further, multiple air filter assemblies 110 can either be used in cascade or in tandem based on their application. In case multiple air filter assemblies 110 are used in cascade, different kinds of filter cartridges may be used, each configured to remove a specific kind of dust or pollutant from the air. Such arrangements may be used based on various factors, such as the size of the internal combustion engine 108, and the region of operation.

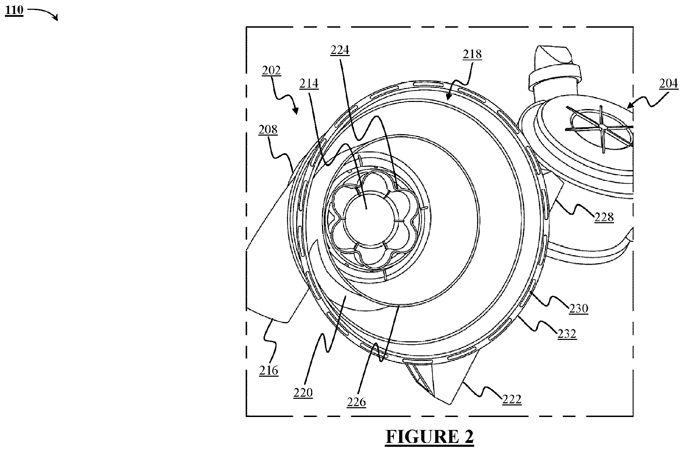

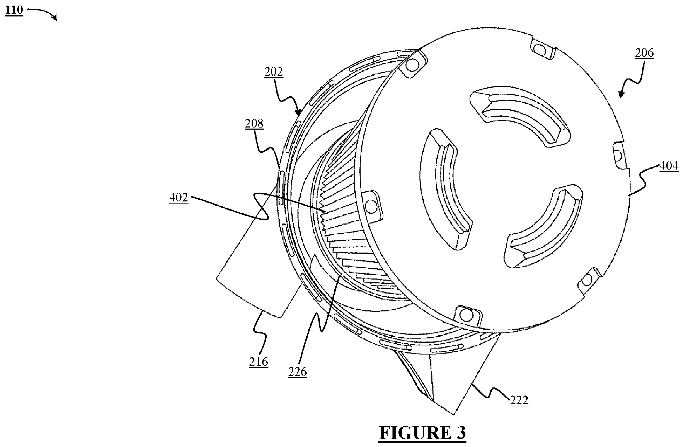

The air filter assembly 110 is designed in such a way that the components that interact with each other to clean the air have non-complementing structural attributes. Details of the air filter assembly 110 may be provided from Figures 2 and 3 which illustrate different components of the air filter assembly 110. Specifically, Figure 2 illustrates an exploded view of the air filter assembly 110 having a filter housing 202 and a cover 204. Further, Figure 3 illustrates an isometric view of the filter housing 202 installed with a filter cartridge 206. In some embodiments, the filter housing 202 is adapted to house the filter cartridge 206 and has ports to allow ingress and egress of air.

The filter housing 202 and the filter cartridge 206 are designed in such a way that the engagement surfaces of the filter housing 202 and the filter cartridge 206 have non-complementing profiles. Further, the non-complementing surfaces create a seal, unlike conventional air filters that utilize complementing surfaces to create the seal. The filter housing 202 forms a base of the air filter assembly 110 and the cover 204 may be installed on the filter housing 202. Together, the filter housing 202 and the cover 204 define an internal volume to accommodate the filter cartridge 206. The cover 204 allows a user to install or uninstall the filter cartridge 206 from the filter housing 202. The filter cartridge 206 is configured to clean the air.

In the illustrated embodiment, the filter housing 202 may have a cylindrical body having a curved wall 208 and a bottom wall 220. Further, the bottom wall 220 may define a closed end of the filter housing 202. The curved wall 208 may include a bracket 222 that enables the mounting of the filter housing 202 on a support surface (not shown). In one embodiment, the bracket 222 may include holes to receive fasteners and, in another embodiment, the bracket 222 may include a snap lock to secure the bracket 222 on the support surface. The bottom wall 220 may include an outlet 214 to allow the air to egress from the filter housing 202. As shown in Figure 2, the outlet 214 is formed at the centre of the bottom wall 220. The bottom wall 220 includes an outlet port (not shown) that is fluidically coupled to the outlet 214. The outlet port can be a bent hose that allows the air to exit from the air filter assembly 110. The filter housing 202 also includes an inlet port 216 formed tangentially with respect to the curved wall 208 of the filter housing 202 to ingress the air therein.

The filter housing 202 may be made of polymer and use the injection moulding technique. The filter housing 202 may also be formed by casting. In some embodiments, the filter housing 202 may be made as a single-piece component or as an assembly of subcomponents.

In some embodiments, the filter housing 202 has an open end 218 that can receive the cover 204. Further, the open end 218 has a plurality of slot 230 around its periphery and is configured to receive locks on the periphery of the cover 204. Further, the filter housing 202 has a lip 232 at the open end 218 which receives a lock 228 of the cover 204. The lock 228 can be easily released to detach the cover 204 from the filter housing 202 to either install or uninstall the filter cartridge 206, shown in Figure 2.

The outlet 214 includes an engagement wall 224 surrounding the outlet 214. The engagement wall 224 is concentric to the outlet 214 and extends axially along an axis of the filter housing 202. The engagement wall 224 may have a first predefined shape around the outlet 214. In some embodiments, the engagement wall 224 may have a floral shape as shown in Figure 1. The engagement wall 224 can have a different shape in other embodiments. The engagement wall 224 may be moulded along with the filter housing 202. In some embodiments, the engagement wall 224 may be installed at the bottom wall 220, either by gluing or fastening.

The filter housing 202 also includes a holder 226 that is formed on the bottom wall 220 and is configured to receive the filter cartridge 206 illustrated in Figure 3. As shown in Figure 2, the holder 226 is formed concentrically around the outlet 214 and the engagement wall 224. Further, the holder 226 extends axially inside the filter housing 202 and has a height greater than the height of the engagement wall 224. The holder 226, may extend up to one-third of the length of the filter housing 202. The holder 226 and the curved wall 208 define an annular region adapted to receive the air within the filter housing 202 via the inlet port 216. Like the engagement wall 224, the holder 226 may either be moulded along with the filter housing 202 or installed at the bottom wall 220. In either case, a junction between a lower portion of the holder 226 and the bottom wall 220 is airtight, and air does not leak therethrough. In some embodiments, the size of the holder 226 may be based on various factors, such as the overall size of the filter housing 202, and the size of the filter cartridge 206

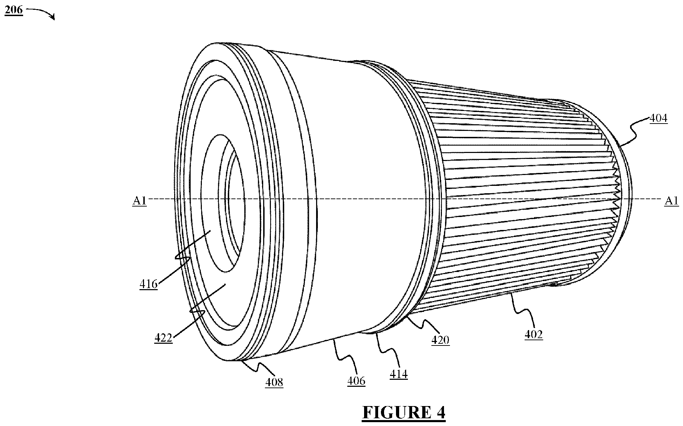

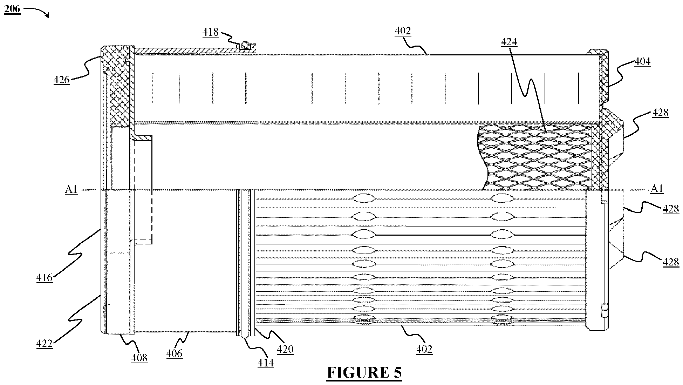

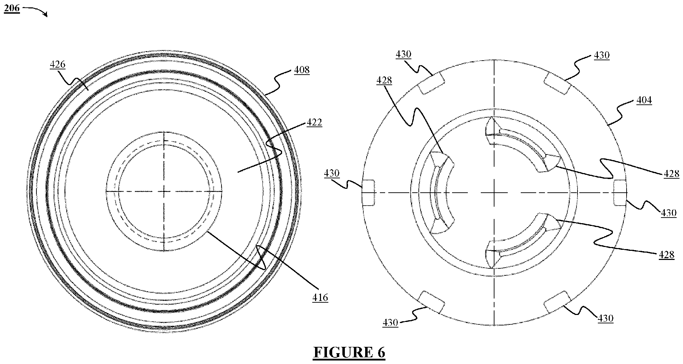

The filter cartridge 206 is installed in the filter housing 202, such that a portion of the filter cartridge is removably installed inside the holder 226. Details of the filter cartridge 206 are explained with respect to Figure 2 in conjunction with Figures 4, 5, and 6. Specifically, Figure 4 illustrates a detailed perspective view of the filter cartridge 206, according to an embodiment of the invention while Figure 5 illustrates a cut sectional view of the filter cartridge 206. Further, Figure 6 illustrates a front view (A) and a rear view (B) of the filter cartridge 206.

The filter cartridge 206 is configured to clean the air passing there through. The filter cartridge 206 includes a filter media 402 and a base 406. The filter media 402 is made of a material capable of removing dust particles from the air passing therethrough. In some embodiments, the filter media 402 is made of pleated paper. In other embodiments, the filter media 402 can be made of other suitable materials. The filter media 402 may have a cylindrical shape with a central hollow portion, such that the air can enter the filter media 402 through its body and may travel towards the central hollow portion. As the air travels through the filter media 402, the filter media 402 removes the dust particles from the air the clean air fills the central hollow portion.

The filter media 402 extends to a major portion of the filter cartridge 206. The filter media 402 may also have a length greater than the height of the filter housing 202, such that the filter media 402 reside partially in the filter housing 202 and partially in the cover 204. Further, the filter cartridge 206 has an end cap 404 formed at a distal end of the filter media 402, such that the end cap 404 abuts the ceiling of the cover 204 when the cover 204 is closed. Further, the end cap 404 may have attachment portions 428 that receive locks on the ceiling of the cover 204 to secure the filter media 402 inside the cover 204. Such an arrangement ensures that the filter media 402 does not move relative to the filter housing 202 and the cover 204. The end cap 404 may also form a top seal to seal around the attachment portions 428 to prevent the passage of air therethrough. In addition, the end cap 404 may also include a plurality of locking portions 430 that receive additional locks on the ceiling of the cover 204.

The filter cartridge 206 also has an inner hollow tube 424 that provides structural support to the filter media 402 as shown in Figure 5. The inner hollow tube 424 may be made of wire mesh such as a flattened metal having a diamond-shaped wire mesh. In an exemplary embodiment the flattened metal is electro-galvanised steel . In some embodiments, the hollow tube 424 may be integrated into the filter media 402 as a single unit.

In some embodiments, the base 406 is configured to receive the filter media 402. In some embodiments, the base 406 has a hollow cylinder which receives the filter media 402. Further, the base 406 has a front end 408 and a rear end 420 opposite the front end 408. The front end 408 has a hole 416 at its centre that gets aligned with the outlet 214 when the base 406 is inserted in the holder 226. The front end 408 may have a raised portion 426 formed around its periphery. In some embodiments, a height of the holder 226 and a length of the base 406 are equal. During the operation, the base 406 transfers the air from the filter media to the outlet 214 via the hole 416.

The base 406 includes a first sealant 422 formed around the hole 416 at the front end 408 of the base 406. The first sealant 422 is made of polyurethane foam and is housed within the raised portion 426. The first sealant 422 may have a second predefined shape, such that the first predefined shape is different from the second predefined shape. In some embodiments, the first sealant 422 has a flat surface. Further, the first sealant 422 is a flat gasket having a flat surface. The flat surface engages with the engagement wall 224 to create an axial seal. Further, the axial seal is configured to prevent the escape of air coming from the filter cartridge back into the annular region. The axial seal may be understood as a seal that extends along a longitudinal axis A1 of the filter cartridge 206.

The base 406 also includes a second sealant 414 that is disposed around the periphery of the base 406 and configured to engage with an inner wall of the holder 226 to create a radial seal. As shown in Figure 5, the second sealant 414 is installed in a groove 418 on the periphery of the base 406. The radial seal may be understood as a seal that extends orthogonally with respect to a longitudinal axis A1 of the filter cartridge 206. The second sealant 414 provides additional sealing between the holder 226 and the filter cartridge 206. In some embodiments, the second sealant 414 is an O-ring which is disposed at the rear end 420 and engages with the inner wall of the holder 226. Although not shown in Figure 2, the base 406 may also include additional sealant around its periphery that provides redundant radial seals. In some embodiments, the second sealant 414 is formed of an elastomeric material such as nitrile rubber. Further, the second sealant 414 may be lubricated using 40W motor oil prior to its installation.

During the assembly, the cover 204 is removed from the filter housing 202. Thereafter, the base 406 is inserted in the holder 226. As the base 406 is pushed further into the holder 226, the first sealant 422 makes contact with the engagement wall 224. The first sealant 422 undergoes elastic deformation, such that a portion of the flat surface of the first sealant 422 compresses against the edges of the engagement wall 224 to form the axial seal. Simultaneously, the second sealant 414 is pressed against the inner wall of the holder 226 thereby creating the radial seal. Once assembled, the air filter assembly 110 may be deployed to clean the air. In some embodiments, the air is pulled through the inlet port 216 into the filter housing 202, such that the air fills the annular region. Additional air fills the rest of the inner volume of the air filter assembly 110.

As the air fills the inner volume, a portion of air tries to leak between the holder 226 and the base 406. However, the radial seal created by the second sealant 414 prevents leakage. The pressurized air then passes through the filter media 402 which removes dust particles from the air to form clean air. In some embodiments, the clean air travels radially inward towards a hollow section of the filter media 402 formed by the inner hollow tube 424. Thereafter, the clean air then travels downwards into the base 406 and finally exits the hole 416 into the outlet 214. The axial seal created by the first sealant 422 against the engagement wall 224 prevents leakage of clean air as the air travels from the hole to the outlet 214. The clean air finally exits the filter housing 202.

According to this disclosure, the combination of the axial seal and the radial seal prevents leakage of the air. Moreover, the first sealant 422 forms the axial seal with the engagement wall 224 which has a non-complementing profile. Therefore, such an arrangement does away with the use of a specifically designed filter cartridge.

Since the filter cartridge 206 does not have a complementing profile for the engagement wall 224, the filter cartridge 206 can be used in a different filter housing that has an engagement wall of a different predefined shape. Moreover, the filter cartridge 206 of this invention can be a replacement filter cartridge in conventional air filters while ensuring a leak-proof air filter. Therefore, the filter cartridge 206 can be retrofitted with conventional air filters. The ability of the filter cartridge 206 to be retrofitted in a conventional filter cartridge 206 also reduces the dependency on the same type of replacement air filter in case of clogging or damage. Thus, the filter cartridge 206 of this invention alleviates the downtime of the refrigeration system.

While specific language has been used to describe the invention, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

## Claims

1. An air filter assembly (110), comprising:
a filter housing (202) comprising:
an outlet (214) formed on a bottom wall (220) of the filter housing, the outlet configured to allow egress of the air through the filter housing, wherein the outlet comprises an engagement wall (224) formed in a predefined shape around the outlet; and
a holder (226) formed on the bottom wall and concentrically disposed around the outlet; and
a filter cartridge (206) removably installed inside the holder, the filter cartridge comprising a filter media (402) configured to clean air passing therethrough and a base (406) removably installed in the holder, the base configured to receive the filter media and to transfer the air from the filter media to the outlet via a hole (416) on a front end (408) of the base, the base comprising:
a first sealant (422) disposed around the hole and having a flat surface configured to engage with edges of the engagement wall to form an axial seal; and
a second sealant (414) disposed around a periphery of the base and configured to engage with an inner wall of the holder to form a radial seal.

2. The air filter assembly of claim 1, comprising a cover (204) detachably coupled to an open end (218) of the filter housing and configured to accommodate the filter cartridge,
optionally wherein the filter cartridge comprises an end cap at a distal end of the filter media, and wherein the end cap abuts a ceiling of the cover.

3. The air filter assembly as claimed in claim 1 or 2, wherein the first sealant is a flat gasket, and the second sealant is an O-ring; and/or
wherein the first sealant is adapted to undergo elastic deformation to form the axial seal.

4. The air filter assembly as claimed in any one of claims 1 to 3, comprising an inlet port (216) formed tangentially with respect to a curved wall (208) of the filter housing.

5. The air filter assembly as claimed in any one of claims 1 to 4, wherein a portion of the flat surface compresses against the edges of the engagement wall to form the axial seal.

6. The air filter assembly as claimed in any one of claims 1 to 5, wherein a height of the holder and a length of the base are equal; and/or
wherein the filter housing comprises an outlet port fluidically coupled to the outlet and configured to egress the clean air from the filter housing.

7. An air filter assembly (110), comprising:
a filter housing (202) comprising:
an outlet (214) formed on a bottom wall (220) of the filter housing, the outlet configured to allow egress of air through the filter housing, wherein the outlet comprises an engagement wall (224) having a first predefined shape around the outlet; and
a holder (226) formed on the bottom wall and concentrically disposed around the outlet; and
a filter cartridge (206) removably installed inside the holder, the filter cartridge comprising a filter media (402) configured to clean air passing therethrough and a base (406) removably installed in the holder, the base configured to receive the filter media and to transfer the air from the filter media to the outlet via a hole (416) on a front end (408) of the base, the base comprising:
a first sealant (422) disposed around the hole and having a second predefined shape and is configured to engage with the engagement wall to form an axial seal; and
a second sealant (414) disposed around a periphery of the base and configured to engage with an inner wall of the holder to form a radial seal,
wherein the first predefined shape is different from the second predefined shape.

8. The air filter assembly of claim 7, comprising a cover (204) detachably coupled to an open end (218) of the filter housing and configured to accommodate the filter cartridge,
optionally wherein the filter cartridge comprises an end cap at a distal end of the filter media, and wherein the end cap abuts a ceiling of the cover.

9. The air filter assembly as claimed in any one of claims 7 or 8, wherein the first sealant is a flat gasket, and the second sealant is an O-ring; and/or
wherein the first sealant is adapted to undergo elastic deformation to form the axial seal.

10. The air filter assembly as claimed in any one of claims 7 to 9, comprising an inlet port formed tangentially with respect to a curved wall of the filter housing.

11. The air filter assembly as claimed in any one of claims 7 to 10, wherein a portion of the flat surface compresses against the edges of the engagement wall to form the axial seal.

12. The air filter assembly as claimed in any one of claims 7 to 11, wherein a height of the holder and a length of the base are equal; and/or
wherein the filter housing comprises an outlet port fluidically coupled to the outlet and configured to egress the clean air from the filter housing.

13. A refrigeration system (102) having a compressor, comprising:
an internal combustion engine (108) configured to power the compressor;
an air filter assembly (110) fluidically coupled to an intake manifold of the internal combustion engine, the air filter assembly comprising:
a filter housing (202) comprising
an outlet (214) formed on a bottom wall (220) of the filter housing, the outlet configured to allow egress of the air through the filter housing, wherein the outlet comprises an engagement wall (224) formed in a predefined shape around the outlet; and
a holder (226) formed on the bottom wall and concentrically disposed around the outlet; and
a filter cartridge (206) removably installed inside the holder, the filter cartridge comprising a filter media (402) configured to clean air passing therethrough and a base (406) removably installed in the holder, the base configured to receive the filter media and to transfer the air from the filter media to the outlet via a hole (416) on a front end (408) of the base, the base comprising:
a first sealant (422) disposed around the hole and having a flat surface configured to engage with edges of the engagement wall to form an axial seal; and
a second sealant (414) disposed around a periphery of the base and configured to engage with an inner wall of the holder to form a radial seal.

14. The refrigeration system of claim 13, wherein the first sealant is a flat gasket, and the second sealant is an O-ring.
